(19) Europäisches Patentamt / European Patent Office / Office européen des brevets

(11) **EP 3 555 461 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **17822240.2**

(22) Anmeldetag: **14.12.2017**

(51) Internationale Patentklassifikation (IPC):
**F03D 7/02** (2006.01)

(52) Gemeinsame Patentklassifikation (CPC):
**F03D 7/0296; F03D 7/0276; F03D 7/028;**
F05B 2260/96; F05B 2270/101; F05B 2270/1033;
F05B 2270/324; F05B 2270/325; F05B 2270/327;
F05B 2270/333; Y02E 10/72

(86) Internationale Anmeldenummer:
**PCT/EP2017/082869**

(87) Internationale Veröffentlichungsnummer:
**WO 2018/109100 (21.06.2018 Gazette 2018/25)**

(54) **VERFAHREN ZUM BETRIEB EINER WINDENERGIEANLAGE SOWIE EINRICHTUNG ZUM STEUERN UND/ODER REGELN EINER WINDENERGIEANLAGE UND ENTSPRECHENDE WINDENERGIEANLAGE MIT EINEM ROTOR UND EINEM ÜBER DEN ROTOR ANGETRIEBENEN GENERATOR ZUR ERZEUGUNG EINER ELEKTRISCHEN LEISTUNG**

METHOD FOR OPERATING A WIND TURBINE AND DEVICE FOR THE OPEN-LOOP AND/OR CLOSED-LOOP CONTROL OF A WIND TURBINE AND CORRESPONDING WIND TURBINE HAVING A ROTOR AND A GENERATOR DRIVEN BY THE ROTOR FOR GENERATING ELECTRICAL POWER

PROCÉDÉ POUR FAIRE FONCTIONNER UN AÉROGÉNÉRATEUR AINSI QUE DISPOSITIF POUR COMMANDER ET/OU RÉGULER UN AÉROGÉNÉRATEUR ET AÉROGÉNÉRATEUR CORRESPONDANT COMPRENANT UN ROTOR ET UN GÉNÉRATEUR ENTRAÎNÉ PAR LE BIAIS DU ROTOR POUR GÉNÉRER UNE PUISSANCE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2016 DE 102016124703**

(43) Veröffentlichungstag der Anmeldung:
**23.10.2019 Patentblatt 2019/43**

(73) Patentinhaber: **Wobben Properties GmbH**
**26607 Aurich (DE)**

(72) Erfinder:
• **MESSING, Ralf**
**26605 Aurich (DE)**

• **NAPIERALA, Christan Frank**
**26603 Aurich (DE)**
• **SCHEIT, Christoph**
**26605 Aurich (DE)**
• **BEKIROPOULOS, Dimitrios**
**26603 Aurich (DE)**

(74) Vertreter: **Eisenführ Speiser**
**Patentanwälte Rechtsanwälte PartGmbB**
**Stralauer Platz 34**
**10243 Berlin (DE)**

(56) Entgegenhaltungen:
**EP-A2- 2 463 520 EP-A2- 2 657 518**

**Beschreibung**

Die Erfindung betrifft ein Verfahren gemäß dem Oberbegriff des Anspruchs 1 zum Betrieb einer Windenergieanlage mit einem Rotor und einem über den Rotor angetriebenen Generator zur Erzeugung einer elektrischen Leistung. Bei dem Verfahren wird eine für die Windenergieanlage relevante Umgebungsvariable umfassend wenigstens eine für die Windenergieanlage relevante Luftdichte ermittelt und zudem eine Drehzahl des Generator-.Rotors (Rotor) ermittelt und es wird eine abzugebende elektrische Leistung des Generators vorgegeben. In dem Verfahren wird die Windenergieanlage zum Erzeugen der abzugebenden Leistung gemäß einer Betriebsführung eingestellt. Vorzugsweise wird der Generator eingestellt mittels eines Erregerstroms des Generators. Die Betriebsführung gibt einen Zusammenhang zwischen der Drehzahl des Rotors und der abzugebenden elektrischen Leistung an.

Dabei wird die Betriebsführung in Abhängigkeit der für die Windenergieanlage relevanten Luftdichte angepasst. Ein solches Verfahren ist bereits seitens der Anmelderin bekannt aus EP 1 368 566 B1.

Darüber hinaus ist es grundsätzlich bekannt, die für eine Windenergieanlage relevante Luftdichte beim Betrieb einer Windenergieanlage zu berücksichtigen zur weiteren Berücksichtigung einer Massenstromdichte am Rotorblatt.

DE 19 844 258 A1 sieht vor, dass bei einer Windenergieanlage mit einem vom Wind antreibbaren Rotor mit verstellbaren Rotorblättern ein mit dem Rotor verbundener Generator zur Erzeugung elektrischer Energie genutzt wird, wobei die Leistungsabgabe des Generators bei variabler Rotordrehzahl möglich ist. Im Betriebsführungssystem ist vorgesehen, dass innerhalb eines vorgegebenen Windgeschwindigkeitsbereichs die Rotordrehzahl unter Verstellen der Rotorblattwinkel regelnd ausgebildet wird.

Gemäß dem Artikel National Academy Press, 1991, "Assessment of Research Needs for Wind Turbine Rotor Materials Technology - Chapter 6" Active Control in Wind Turbines - Control Problem for Wind Turbines" - Seiten 91 bis 108 (http://www.nap.edu/read/1824/chapter/8#96) --insbesondere Seite 96 - ist vorgesehen, dass Massenflussdichte und Druck am Rotorblatt gemessen werden, um sich ankündigenden Turbulenzen mit entsprechender Steuerung im Rahmen einer relativ zügigen Anpassung der Blattstruktur zu begegnen.

In JP 2008/309488 A ist eine Steuerung vorgesehen, die basierend auf der Windkraftdichte, der Windenergie und der integrierten Windenergie des Windes die Drehzahl des elektrischen Generators anpasst, um eine ausgewogene Leistungsabgabe zu ermöglichen - dabei wird im Rahmen der Berücksichtigung der Windenergiedichte auch die Luftdichte mit berücksichtigt. Ähnlich wird dies auch in EP 2 264 313 B1 berücksichtigt, wobei ein Massenstromsensor, wie in JP 2008/309488 eingesetzt wird.

Das Deutsche Patent- und Markenamt hat in der Prioritätsanmeldung zur vorliegenden PCT-Anmeldung folgenden Stand der Technik recherchiert: WO 2012/149984 A1 und WO 2014/078773 A1.

Ein weiteres Dokument aus dem Stand der Technik ist EP 2 463 520 A2.

Aktuell werden Leistungsberechnungen für eine Windenergieanlage (WEA) unter Annahme der Normatmosphäre durchgeführt. Die dabei verwendete Norm-Dichte $p\_norm$ für die Luft-Dichte $p\_Luft$ beträgt $p\_norm = 1{,}225 \, kg/m^3$, d.h. nach den Vorschriften der International Civil Aviation Organization (ICAO) für eine Standardatmosphäre (ISA). So erfolgt die Auslegung einer Windenergieanlage gemäß einer vorbestimmten Temperatur-Enveloppe gemäß dem IEC (International Engineering Code). EP 1 918 581 A2 sieht beispielsweise vor, eine Luftdichte bei kalten Wetterbedingungen zu bestimmen indem die Temperatur und der Druck der Umgebung gemessen wird - dies kann genutzt werden die auf eine Windenergieanlage wirkende Last zu reduzieren.

An Standorten in großer Höhe und/oder mit im Mittel erhöhten Temperaturen stimmen diese Annahmen jedoch zumindest quantitativ nicht mehr. Es können an Standorten in großer Höhe durchaus gravierende Abweichungen in der Dichte zu kleineren Werten bis ca. 20% von den Auslegebedingungen basierend auf der verwendeten Norm-Dichte $p\_norm$ auftreten - somit ist in solchen Fällen gravierender Abweichungen die normale Vorgehensweise auch grundsätzlich in Frage zu stellen.

Bezüglich der Windleistung gilt:

$$p = \frac{\rho}{2} v_\infty^3 A c_p \eta = \frac{\rho}{2} \frac{v_{tip}^3}{\lambda^3} A c_p \eta$$

Dabei stellt A die durchströmte Fläche, $\eta$ den Generatorwirkungsgrad und $c_p$ den Leistungsbeiwert dar. Der Leistungsbeiwert wird im Folgenden als konstant angenommen. Wird die Leistung P sowie die anderen Variablen der Gleichung konstant gehalten, folgt für die Blattspitzengeschwindigkeit

$$v_{tip} = \sqrt[3]{\frac{2P\lambda^3}{\rho A c_p \eta}} \sim \sqrt[3]{\frac{1}{\rho}}$$

Die Blattspitzengeschwindigkeit $v_{tip}$ ist dann also umgekehrt proportional zur dritten Wurzel aus der Dichte $\rho$ bzw. die Leistung ist direkt proportional zur Dichte $\rho$ bei konstanten anderen Variablen..

Dies wurde bereits von der Anmelderin in der eingangs genannten EP 1 368 566 konkret erkannt. Dort ist, anders als im Stand der Technik, explizit vorgesehen, in der Steuerungsvorrichtung einer Windenergieanlage eine Leistungskennlinie zu hinterlegen, welche der Steuerung der Windenergieanlage erlaubt, aus der ermittelten Rotordrehzahl, die von der Windgeschwindigkeit abhängig ist, die zugeordnete Generatorleistung zu ermitteln. Es wurde erkannt, dass wenn die Energiemenge des Windes zu gering ist, der Rotor des Generators ein angelegtes Generatormoment nicht aufbringen kann und daher die Rotordrehzahl infolge eines zu hohen Generatormomentes sinken kann. Als Lösung ist in EP 1 368 566 B1 vorgeschlagen, dass die Berücksichtigung der Höhe des Aufbauortes der Windenergieanlage über NN die geringere Luftdichte in der Leistungskennlinie berücksichtigt. Dadurch kann die einer Rotordrehzahl und damit einer bestimmten Schnelllaufzahl $\lambda$ zugeordnete, von der Windenergieanlage zu erzeugende Leistung entsprechend angepasst werden, also herabgesetzt werden, sodass das Generatormoment infolge der durch die Steuerungsvorrichtung eingestellten Erregerstroms das über den Rotor bereitgestellte Drehmoment nicht überschreitet. Dies führt dazu, dass der über die Leistungskennlinie festgelegte Wirkungsgrad erhalten bleibt und dem Wind die maximale Energie entnommen werden kann.

Während dies grundsätzlich vorteilhaft sein kann, hat es sich gleichwohl als ebenfalls relevant erwiesen, den jährlichen Ertrag (AEP - Annual Energy Production) einer Windenergieanlage (WEA) zu optimieren. Dies gilt insbesondere für den oben genannten Fall einer geringeren Luftdichte infolge derer die zur Verfügung stehende Windleistung geringer ausfällt - wünschenswert ist es, eine solche geringer zur Verfügung stehende Windleistung zu kompensieren, insbesondere ohne nachteilige Effekte für die Windenergieanlage und die Umgebung.

An dieser Stelle setzt die Erfindung an, deren Aufgabe es ist, ein Verfahren und eine Einrichtung zum Betrieb einer Windenergieanlage mit einem Rotor und über dem Rotor angetriebenen Generator zur Erzeugung einer elektrischen Leistung sowie eine dementsprechende Windenergieanlage anzugeben. Der Erfindung liegt die Aufgabe zugrunde, wenigstens eines der oben genannten Probleme zu beheben oder zu verringern. Insbesondere soll unter Berücksichtigung einer für die Windenergieanlage relevanten Luftdichte, die demzufolge geringer zur Verfügung stehende Windleistung kompensiert, insbesondere in verlässlicher und/oder in verbesserter Weise kompensiert werden.

Insbesondere ist es Aufgabe der Erfindung, bei einem solchen Verfahren bzw. einer entsprechenden Einrichtung zum Steuern und/oder Regeln bzw. einer entsprechenden Windenergieanlage die Betriebsführung in Abhängigkeit der für die Windenergieanlage relevanten --im Vergleich zu Normalbedingungen-- geringeren Luftdichte derart anzupassen, dass eine abzugebende elektrische Leistung des Generators optimiert werden kann, insbesondere verbessert werden kann.

Vorzugsweise ist dies im Sinne einer gesteigerten AEP (Annual Energy Production, Jährliche Energieproduktion) einer Windenergieanlage zu verstehen, wobei vorzugsweise gleichwohl Einwirkungen auf die Umwelt und/oder übermäßige Lasten auf die Windenergieanlage gering gehalten werden sollen. Insbesondere ist es Aufgabe der Erfindung, eine entsprechende Einrichtung zum Steuern und/oder Regeln einer Windenergieanlage anzugeben sowie eine entsprechende Windenergieanlage anzugeben, welche diese Aufgabenstellung berücksichtigt.

Die Aufgabe betreffend das Verfahren wird durch die Erfindung mit einem Verfahren des Anspruchs 1 gelöst.

Basierend auf einem Verfahren der eingangs genannten Art, gemäß dem Oberbegriff des Anspruchs 1, ist erfindungsgemäß weiter vorgesehen, dass:

- eine angepasste Drehzahl des Rotors der Windenergieanlage zum Erzeugen einer abzugebenden elektrischen Leistung unter Verwendung der angepassten Betriebsführung und damit unter Verwendung der für die Windenergieanlage relevanten Luftdichte vorgegeben wird, wobei zum Erzeugen einer optimierten abzugebenden elektrischen Leistung die angepasste Drehzahl eine erhöhte Drehzahl bei erniedrigter Luftdichte ist.

Zusätzlich wird

- eine Schallemission der Windenergieanlage für die angepasste Drehzahl des Rotors unter Verwendung der für die Windenergieanlage relevanten Luftdichte ermittelt, und
- die angepasste Drehzahl wird korrigiert.

Erfindungsgemäß wird die erhöhte begrenzt. Erfindungsgemäß erfolgt die Korrektur auf Basis der ermittelten Schallemission unter Verwendung der für die Windenergieanlage relevanten Luftdichte.

Die Erfindung geht von der Überlegung aus, dass die Betriebsführung in Abhängigkeit der für die Windenergieanlage relevanten Luftdichte angepasst werden kann. Gemäß dem Konzept der Erfindung sollte dies dazu führen, dass die angepasste Drehzahl des Rotors gewählt wird zum Erzeugen einer vorzugsweise optimierten abzugebenden elektrischen Leistung des Generators. Dies bedeutet, dass im Falle einer für die Windenergieanlage relevanten vergleichsweise erniedrigten Luftdichte die angepasste Drehzahl erhöht ist gegenüber einer (Nenn-)Drehzahl betreffend eine Normdichte einer Normatmosphäre.

Die Erfindung hat zudem erkannt, dass für eine Drehzahl des Rotors bzw. unter der Maßnahme einer angepassten Drehzahl des Rotors der Windenergieanlage auch eine Schallemission der Windenergieanlage für die vorgegebene Drehzahl bzw. angepasste Drehzahl des Rotors beeinflusst wird. Erfindungsgemäß ist alternativ oder zusätzlich vorgesehen, dass eine Schallemission der Windenergieanlage für die angepasste Drehzahl des Rotors unter Verwendung der für die Windenergieanlage relevanten Luftdichte ermittelt wird und die angepasste Drehzahl korrigiert wird auf Basis der unter Verwendung der für die Windenergieanlage relevanten Luftdichte ermittelten Schallemission.

Mit anderen Worten, erlaubt die erfindungsgemäße Betriebsführung beispielsweise, dass bei gleicher Anlagenleistung, angepasster Drehzahl und geringerer Luftdichte --also bei insofern optimierter abzugebender elektrischer Leistungder von dem Rotor der Windenergieanlage verursachte Schalldruck und damit die Schallemission des Rotors bzw. die im Wesentlichen relevante Schallemission der Windenergieanlage geringer sein kann, als unter Normbedingungen einer Normatmosphäre.

An einem Beispiel wird das erfindungsgemäße Konzept im folgenden konkreter erläutert:
Bei gleicher Anlagenleistung liegt -also wie von der Erfindung erkannt-- bei verringerter Luftdichte eine ggfs. erhöhte Anströmgeschwindigkeit vor, sodass --wie von der Erfindung erkannt-- die Drehzahlen in der Betriebskennlinie und/oder die Solldrehzahl angepasst werden können, um die Schnelllaufzahl über der Drehzahl konstant zu halten. Dies kann beispielsweise --wie in der Detailbeschreibung im Einzelnen erläutert-- eine Anpassung der Drehzahl ermöglichen, wie folgt:

$$n_{korr} = \sqrt[3]{\frac{\rho_{norm}}{\rho}} n \quad \text{(I)}$$

Hierbei ist $\rho_{norm}$ die normale oder gemäß ISA "normierte" Dichte, für welche die Betriebskennlinie ursprünglich, z.B. normalerweise gemäß IEC, entworfen wurde und $n_{korr}$ die angepasste Drehzahl, gegenüber der ursprünglich in der Betriebskennlinie definierten Drehzahl n. Zum Erzeugen einer optimierten abzugebenden elektrischen Leistung ist die angepasste Drehzahl gemäß dem Konzept der erfindungsgemäßen ersten Variante eine erhöhte Drehzahl bei erniedrigter Luftdichte.

Zusätzlich ist auch möglich, die Drehzahl so zu korrigieren, dass der von der Windenergieanlage verursachte Schalldruck weitestgehend gleich bleibt. Daraus folgt, dass bei gleichem Schalldruck sich die Drehzahl entsprechend der Dichte ändern kann; beispielsweise mit einer Abhängigkeit wie folgt:

$$n_{korr} = \left(\frac{\rho_{norm}}{\rho}\right)^{\frac{2}{5}} n \quad \text{(II)}$$

Damit könnte sogar eine im Vergleich zur angepassten Drehzahl -also ggfs. auch bei niedrigerer Luftdichte erhöhten Drehzahl-- eine noch weiter erhöhte Drehzahl als korrigierte Drehzahl im Vergleich zur obigen gemäß Gleichung (I) angepassten Drehzahl verwendet werden, ohne die Schallemission des Rotors zu erhöhen.

Insgesamt hat die Erfindung damit erkannt, dass die Berücksichtigung des Schalldrucks für eine Schallemission der Windenergieanlage zum Vorgeben einer angepassten Drehzahl des Rotors unter Verwendung einer für die Windenergieanlage relevanten Luftdichte als wichtiger bzw. weiterer wichtiger korrigierender Parameter eingehen sollte. über den die Drehzahl angepasst (z.B. gemäß Gleichung (II)) oder die angepasste Drehzahl (z.B. gemäß Gleichung (I)) weiter korrigiert werden kann (z.B. gemäß Gleichung (II)). Diese Maßnahmen erfolgen vorteilhaft ebenfalls auf Basis der unter Verwendung der für die Windenergieanlage relevanten Luftdichte zur Ermittlung der relevanten Schallemission.

Dies kann -je nach Bedarf-- in der oben beschriebenen Weise entweder zu einer weiteren Erhöhung der Drehzahl im Sinne einer Korrektur führen. Es kann aber auch gegebenenfalls zu einer Begrenzung, insbesondere Limitierung der angepassten Drehzahl nach oben führen - mit letzterer Alternative kann eine bestimmte vorgegebenen Schallemission garantiert werden.

Um insbesondere eine Optimierung der abzugebenden elektrischen Leistung der Windenergieanlage zu erreichen --kurz und vereinfacht gesagt bevorzugt eine "Leistungsoptimierung unter der Randbedingung einer Schallemissionsgrenze"-- erweist sich das erfindungsgemäße Konzept als verbessert gegenüber eine üblichen Leistungsoptimierung, jedenfalls aber als eine insgesamt für die Umgebung verträgliche Leistungsoptimierung, da die Schallemission der Windenergieanlage auch für eine vorgegebene angepasste Drehzahl des Rotors im Rahmen bleibt.

Die Erfindung führt im Rahmen der Aufgabenstellung auch auf eine Einrichtung des Anspruchs 15 und eine Windenergieanlage des Anspruchs 16 und einen Windpark des Anspruchs 17.

Im Ergebnis bietet das Konzept der Erfindung erstmals vorteilhaft die Möglichkeit vor, den Jahresertrag bei Windenergieanlagen an Standorten mit geringerer Dichte einzuhalten unter Verwendung einer veränderten Betriebsführung, vorzugsweise mittels einer veränderten Betriebskennlinie. Um die geringere zur Verfügung stehende Windleistung zu kompensieren, sieht das Konzept der Erfindung insbesondere vor, die Anlagen mit einer höheren Nenndrehzahl zu betreiben.

Da dies auch zu einer höheren bzw. maximalen Blattspitzengeschwindigkeit führen kann, ist --wie von der Erfindung erkannt-- ein erhöhter Schalldruck vom Rotor zu erwarten. Andererseits wirken sich --wie ebenfalls von der Erfindung erkannt-- Dichte und Temperatur ebenfalls auf den Schalldruck aus. Die Erfindung hat erstmals den gravierenden Einfluss der Umgebungsparameter Dichte und Schallgeschwindigkeit auf die Rotorblattakustik und damit die relevante Schallemission der Windenergieanlage erkannt.

Es zeigt sich, dass eine beispielsweise um ca. 20% reduzierte Dichte zu einem um ca. 2 dB niedrigeren Schalldruck vom Rotor führt. Ein theoretischer Vergleich des aufgrund höherer Drehzahl zu erwartenden Pegels mit der Reduzierung aufgrund kleinerer Dichte zeigt, dass die Windkraftanlagen bei gleicher Leistung, geringerer Dichte und erhöhter Drehzahl tendenziell entweder leiser werden könnte, d.h. eine geringere Schallemission aufweist, oder aber die Drehzahl weiter erhöht werden könnte. Dies würde den Wirkungsgrad des Generators steigern.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Das Anpassen kann beispielweise für eine Solldrehzahl anhand von mindestens einer messtechnisch direkt bestimmten, die Schallemission beschreibenden Größe erfolgen. Die mindestens eine Schallemission beschreibende Größe kann beispielsweise der Schalldruck und/oder der Schalldruckpegel und/oder der Schallleistungspegel und/oder die Schallfrequenz und/oder ein an ein Hörempfinden angepasster, insbesondere Frequenzbewerteter Schalldruck, insbesondere vom Rotor oder der Windenergieanlage, sein.

Eine Weiterbildung sieht vorteilhaft für den Fall vor, dass die Luftdichte als relevante Umgebungsvariable eine gegenüber einer Normdichte einer Normatmosphäre erniedrigte Luftdichte ist, dass die Betriebsführung in Abhängigkeit der für die Windenergieanlage erniedrigten Luftdichte angepasst wird. Wie oben erläutert, ist dies insbesondere der Fall bei Windkraftanlagen an Standorten mit geringerer Dichte wie es beispielsweise bei Windkraftanlagen in Höhenlagen vorkommt.

Im Rahmen einer bevorzugten ersten weiterbildenden Variante ist vorgesehen (z.B. unter Berücksichtigung von (I) und dann unter Berücksichtigung von (II)), dass

- die korrigierte Drehzahl auf Basis der unter Verwendung der für die Windenergieanlage relevanten Luftdichte ermittelten Schallemission gegenüber der angepassten Drehzahl noch weiter erhöht ist oder
- die korrigierte Drehzahl gegenüber der angepassten Drehzahl nicht noch weiter erhöht ist und die Windenergieanlage bei noch niedrigerer oder gleichbleibender Schallemission betrieben wird. Diese Weiterbildung erfolgt, wie oben erläutert, aufgrund der Erkenntnis, dass selbst die bei erhöhter Drehzahl grundsätzlich zu erwartenden Schallemissionen vom Rotor und damit im Wesentlichen von der Windenergieanlage eher derart sind, dass diese eine weitere Erhöhung der Drehzahl erlauben.

Im Rahmen einer bevorzugten zweiten weiterbildenden Variante liegt es auch im Rahmen des Konzepts der Erfindung alternativ eine korrigierte und angepasste Drehzahl vorzunehmen, welche auf Basis der unter Verwendung der für die Windenergieanlage relevanten Luftdichte ermittelten Schallemissionen erfolgt (z.B. nur unter Berücksichtigung von (II)). Diese Maßgabe ist insofern allgemein möglich derart, dass die Betriebsführung der Windenergieanlage ausschließlich nach der Schallemission ausgerichtet wird.

Erfindungsgemäß ist im Rahmen dieser zweiten weiterbildenden Variante vorgesehen, dass das Verfahren ausgehend von dem Oberbegriff des Anspruchs 1 alternativ die Schritte aufweist, dass:

- eine Schallemission der Windenergieanlage für die vorgegebene angepasste Drehzahl des Rotors unter Verwendung der für die Windenergieanlage relevanten Luftdichte ermittelt wird, und
- die Drehzahl korrigiert wird auf Basis der unter Verwendung der für die Windenergieanlage relevanten Luftdichte ermittelten Schallemission.

Vorteilhaft erfolgt jedoch auch dies unter der, soweit möglich, überprüften Annahme, dass die abzugebende Leistung gemäß einer Betriebsführung, welche einen Zusammenhang zwischen der Drehzahl des Rotors und der abzugebenden elektrischen Leistung angibt, gewährleistet ist.

Vorteilhaft kann desweiteren für beide Varianten vorgesehen sein, dass

- die Betriebsführung eine Drehzahl-Leistungs-Betriebskennlinie (n/P-Betriebskennlinie) umfasst, wobei
- eine angepasste Betriebskennlinie vorgegeben wird in Abhängigkeit der für die Windenergieanlage relevanten Luftdichte und die Windenergieanlage zum Erzeugen der abzugebenden Leistung mittels der angepassten n/P-Betriebskennlinie in der Betriebsführung eingestellt wird, wobei

- die vorgegebene angepasste aktuelle Drehzahl in der Betriebsführung vorgegeben wird und danach mittels einer Steuerung und/oder Regelung eingestellt wird.

Die Luftdichte kann eine aktuelle Luftdichte am Ort der Windenergieanlage sein, die laufend gemessen und dann dynamisch angepasst wird. Zusätzlich oder alternativ kann die Luftdichte eine generell vorherrschende Luftdichte am Ort der Windenergieanlage sein, die einmal oder wiederholt gemessen und dann statisch angepasst wird.

Die Luftdichte kann aus gemessenen Umgebungswerten bestimmt werden. Vorzugsweise können die Umgebungswerte auch eine für die Windenergieanlage relevante Lufttemperatur umfassen. Die Luftdichte kann auch aus weiteren gemessenen Umgebungswerten bestimmt werden, wobei die weiteren Umgebungswerte auch optional Luftdruck und relative oder absolute Luftfeuchtigkeit umfassen.

Es zeigt sich im Rahmen einer besonders bevorzugten Weiterbildung zudem, dass die Lufttemperatur als relevante Umgebungsvariable im Sinne des Konzepts der Erfindung für eine besonders bevorzugte Weiterbildung genutzt werden kann. An Standorten großer Höhe, z.B. Tchamma, Chile reduziert sich die Dichte bei gleicher Schallgeschwindigkeit. An anderen Standorten kann eine reduzierte Dichte infolge erhöhter Umgebungstemperaturen vorliegen. In letzterem Fall ändert sich auch die Schallgeschwindigkeit als Funktion der Temperatur

$$c_0 = \sqrt{\kappa R T}$$

wobei der Isentropenexponent $\kappa$ und die spezifische Gaskonstante von Luft, R, als konstant betrachtet werden können. Die Dichte ändert sich ebenfalls mit der Temperatur.

Es ist somit besonders bevorzugt, dass eine normale Schallemission der Windenergieanlage in einer Normatmosphäre für die Drehzahl des Rotors ermittelt wird, und - die normale Schallemission abgeglichen wird gegen die Schallemission der Windenergieanlage für die angepasste Drehzahl des Rotors unter Verwendung der für die Windenergieanlage relevanten Luftdichte und/oder Lufttemperatur, und - die angepasste Drehzahl des Rotors der Windenergieanlage korrigiert und optional begrenzt wird.

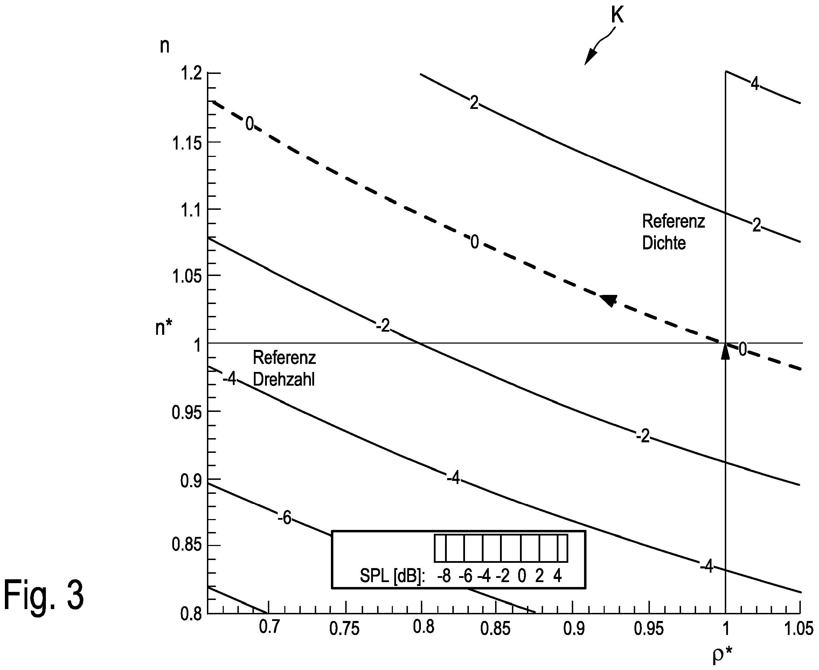

Insbesondere kann entweder zusätzlich zu einer zuvor erfolgten dichteabhängigen Korrektur der Drehzahl oder alternativ die Windenergieanlage mittels der korrigierten Drehzahl für die korrigierte Schallemission betrieben werden, derart, dass die Windenergieanlage an einer korrigierten Schallemissionsgrenze betrieben wird. Hierzu wird insbesondere auf das Ausführungsbeispiel gemäß Fig.3 hingewiesen, das diesbezüglich beispielhaft angeführt sei.

Im Rahmen einer besonders bevorzugten Ausführungsform ist speziell eine bevorzugte Vorgehensweise vorgesehen, derart, dass

- zunächst die Drehzahl des Rotors unter Berücksichtigung einer vorbestimmten Normdichte eine Normatmosphäre eingestellt wird, und
- anschließend die angepasste Drehzahl unter Berücksichtigung der für die Windenergieanlage relevanten Luftdichte und/oder Lufttemperatur vorgegeben wird, wobei
- danach die angepasste Drehzahl korrigiert wird und die Anlage mittels der korrigierten Drehzahl an der korrigierten Schallemissionsgrenze betrieben wird.

Im Rahmen der bereits zuvor erwähnten weiteren besonders bevorzugten Ausführungsform hat sich das Konzept der Erfindung als vorteilhaft erwiesen, für den Fall, dass die Luftdichte eine gegenüber einer Normdichte erniedrigte Luftdichte ist und die korrigierte Drehzahl eine gegenüber der Drehzahl für die Normatmosphäre erhöhte Drehzahl ist. Es kann diese erhöhte Drehzahl eine gegenüber der angepassten Drehzahl weiter erhöht oder aber begrenzt werden. Das Konzept der Erfindung hat sich auch als vorteilhaft erwiesen, für den Fall, dass die Luftdichte eine gegenüber einer Normdichte erhöhte Luftdichte ist und die korrigierte Drehzahl eine gegenüber der Drehzahl für die Normatmosphäre erniedrigte Drehzahl ist. Es kann diese erniedrigte Drehzahl eine gegenüber der angepassten Drehzahl weiter erniedrigt oder aber begrenzt werden.

Optional bietet diese zunächst vorzunehmende Anpassung der Drehzahl und die anschließende Korrektur bzw. Begrenzung der Drehzahl - im Sinne einer Erhöhung oder aber Minderung - auch die Möglichkeit, die Abhängigkeit der Lufttemperatur zu berücksichtigen.

So kann im Rahmen dieser Weiterbildung abhängig von Lufttemperatur und/oder Luftdichte eine Drehzahl des Rotors der Windenergieanlage unter Verwendung der für die Windenergieanlage relevanten erniedrigten Luftdichte gesteuert und/oder geregelt erhöht werden. Vorteilhaft kann beispielsweise eine Leistung erhöht werden bzw. eine garantierte abzugebende Leistung gewährleistet werden, etwa nach Maßgabe einer Jahres-Energie-Produktion (annual energy production -AEP).

So kann zur Umsetzung dieser Vorgehensweise, eine Korrektur zum Anpassen der Solldrehzahl vorgesehen sein, derart dass zunächst festgestellt wird, ob die Luftdichte unterhalb einer für die Schallemission relevanten Größe liegt, d.h. insbesondere wird zunächst festgestellt ob die Luftdichte unterhalb der Normdichte (gemäß einer ISA nach den Bestimmungen der ICAO) liegt, und für den Fall, dass dies gegeben ist, wird die Solldrehzahl hinsichtlich des maximal zulässigen Schallemissionswertes angepasst. Vorteilhaft kann die Windenergieanlage insgesamt zum Erzeugen der abzugebenden Leistung unter Einstellen des Generators eingestellt werden, unter Einstellen eines Erregerstroms, vorzugsweise des Generator-Läufers, unter Einstellen eines oder mehrerer Rotorblätter und/oder eines oder mehrerer Strömungselemente an einem Rotorblatt, unter Einstellen einer Azimuthposition der Gondel der Windenergieanlage.

Es hat sich weiter als vorteilhaft erwiesen, dass die Drehzahl beeinflusst und/oder eingestellt wird mittels einer Ansteuerung eines Anstellwinkels einer Komponente am Rotor, insbesondere eines Pitch-Winkels eines Rotorblattes und/oder eines Anstellwinkels und/oder eines oder mehrerer Strömungselemente an einem Rotorblatt unter Vorgabe der abzugebenden elektrischen Leistung, der Luftdichte und der Schallemission, insbesondere einer oder mehrerer relevanter Schalldruckpegel SPL für einen die Schallemission beschreibenden Schalldruck S.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:

Fig.1     eine Windenergieanlage mit einem Turm und einer Gondel gemäß einer bevorzugten Ausführungsform;

Fig.2     einen Windpark mit beispielhaft drei Windenergieanlagen gemäß einer bevorzugten Ausführungsform;

Fig.3     ein normiertes Drehzahl-Dichte-Diagramm mit Schalldruckpegel-Konturen (SPL in dB) in Bezug auf einen Referenz-Schalldruck, zur Erläuterung einer bevorzugten Ausführungsform des Verfahrens, bei dem die angepasste Drehzahl korrigiert wird und die Anlage mittels der korrigierten Drehzahl an einer korrigierten Schallemissionsgrenze betrieben wird;

Fig.4     ein normiertes Drehzahl-Dichte-Diagramm mit Konturen betreffend einen relevanten Schalldruck für eine Schallemission einer WEA (Windenergieanlage) --z.B. unter Berücksichtigung von (II)) und betreffend eine Leistung oder z.B. unter Berücksichtigung von (I)) als Randbedingung beim Betrieb einer WEA (Windenergieanlage) --;

Fig.5A     ein Schema eines Regelkreises zur Drehzahlkorrektur mit der wahlweisen Randbedingung eines Schalldrucks S und einer Leistung P beim Betrieb einer WEA unter Volllast;

Fig.5B     ein Schema eines Regelkreises zur Drehzahlkorrektur mit der wahlweisen Randbedingung eines Schalldrucks S und einer Leistung P beim Betrieb einer WEA unter Teillast.

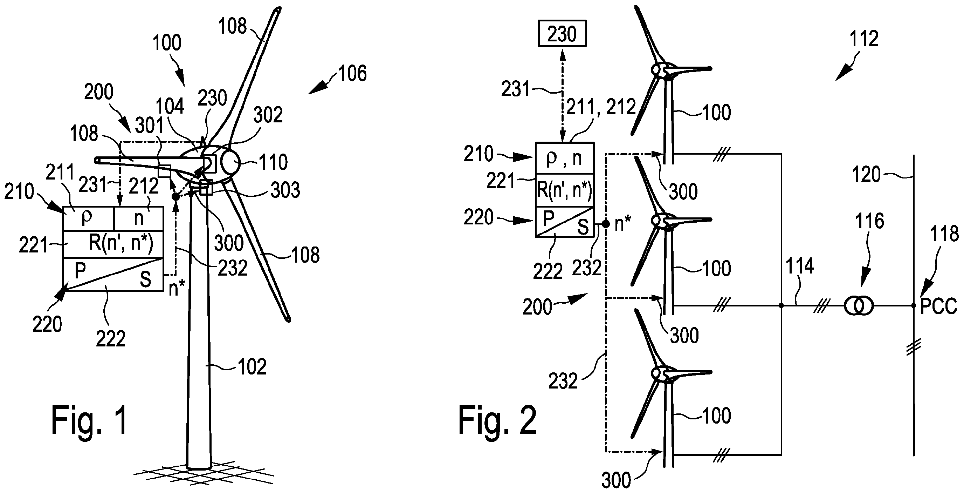

Fig.1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Fig.2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112.

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig.2 ist nur eine vereinfachte Darstellung eines Windparks 112 mit einer Steuerung. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Eine Windenergieanlage der Fig.1 oder eine jede Windenergieanlage des Windparks gemäß Fig.2, oder der Windpark gemäß Fig.2, ist vorliegend mit einer Einrichtung 200 zum Steuern und/oder Regeln (Steuer- und Regeleinrichtung 200) als Teil einer Betriebsführung mit Reglern 220 ausgestattet. Diese Regler 220 steuern eine Stelleinrichtung 300 mit entsprechender Aktorik bzw. Stellgliedern 301, 302, 303 für beispielsweise Rotorblätter, Generator und Gondel der Windenergieanlage 100.

Die Steuer- und Regeleinrichtung 200 erhält gemäß Fig.1 und Fig.2 Messinformationen von einer Sensorik 230 über eine Signalleitung 231, welche an ein Messmodul 210 der Steuer- und Regeleinrichtung 200 gehen.

Dieses Messmodul 210 hat eine erste Ermittlungseinheit 211 zur Ermittlung einer Dichte und eine zweite Ermittlungseinheit 212 zur Ermittlung der Drehzahl n eines Rotors der Windenergieanlage.

Des Weiteren ist als Teil der Regler 220 eine Vorsteuereinheit 221 --z.B. eine Recheneinheit oder dergleichen mit einer oder mehreren hinterlegten Betriebskennlinien R(n', n*)-- vorgesehen, die in der Lage ist, eine angepasste Drehzahl n' entsprechend einer dichte-angepassten Betriebskennlinien R(n') und/oder eine weiter korrigierte Drehzahl n* vorzugeben; vorliegend zudem eine Betriebskennlinien R(n*) entsprechend eines berechneten Schalldrucks S.

Die so angepasste und/oder korrigierte Drehzahl n', n* -also eine gemäß Vorsteuereinheit 221 angepasste Drehzahl n', die zusätzlich oder alternativ (vorzugsweise zusätzlich) gemäß einem Schalldruck S und/oder einer dichteangepassten Leistung P korrigiert werden zu einer Drehzahl n*-- kann über eine weitere Signalleitung 232 an die Windenergieanlage 100 und die entsprechende Stelleinrichtung 300 derselben gegeben werden. Dadurch kann die Drehzahl n* weiter so angepasst werden, dass die Leistung unter Berücksichtigung der Dichte angepassten Leistung und des Schalldrucks S optimiert ist.

Wie eingangs genannt, werden aktuell Leistungsberechnungen für eine Windenergieanlage (WEA) unter Annahme der Normatmosphäre durchgeführt. Die dabei verwendete Norm-Dichte p_norm für die Luft-Dichte p_Luft beträgt p_norm=1,225 kg/m³. An Standorten in großer Höhe und/oder mit im Mittel erhöhten Temperaturen stimmt diese Annahme quantitativ aber nicht mehr und es können durchaus Abweichungen in der Dichte zu kleineren Werten bis ca. 20% von den Auslegebedingungen basierend auf der verwendeten Norm-Dichte p_norm auftreten.

Im Unterschied zum Stand der Technik ist vorgesehen, gemäß der vorliegenden Erfindung eine entsprechende spezifische Leistung der Windenergieanlage (WEA) auch bei geringerer Dichte zu garantieren; d.h. bei ansonsten gleicher Windgeschwindigkeit und auch zunächst gleicher Drehzahl - es kann aber die geringere Dichte durch eine erhöhte Drehzahl kompensiert werden. Die WEA wird dann mit einer Drehzahl größer als die Solldrehzahl n_soll betrieben. Durch die höhere Drehzahl ist letztendlich auch ein erhöhter Wert einer AEP (annual energy production) zu erwarten. So erfolgt die Auslegung einer Windenergieanlage gemäß einer vorbestimmten Temperatur-Enveloppe gemäß dem IEC (International Engineering Code).

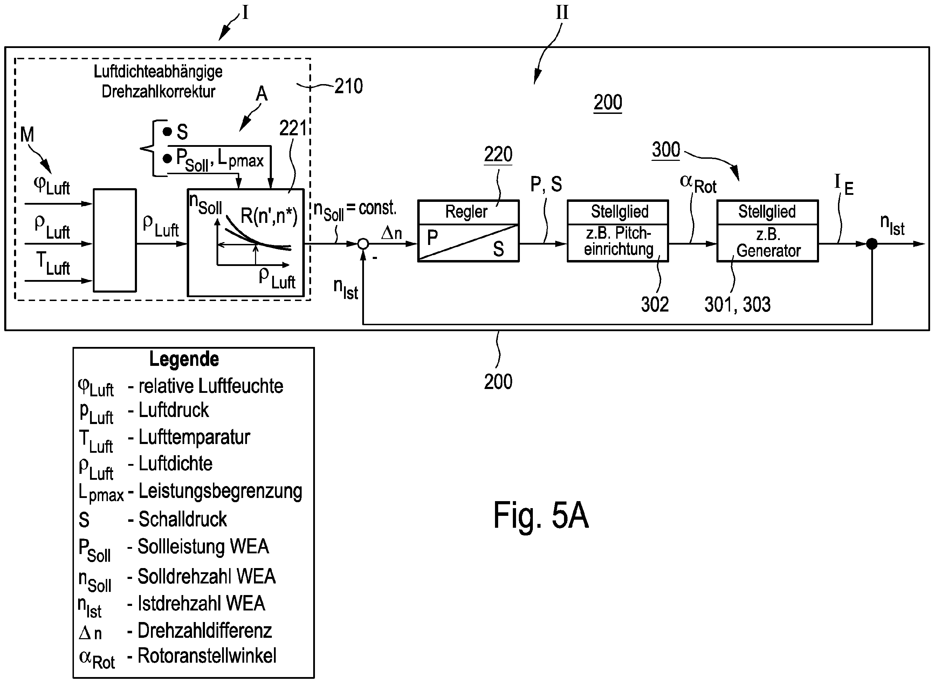

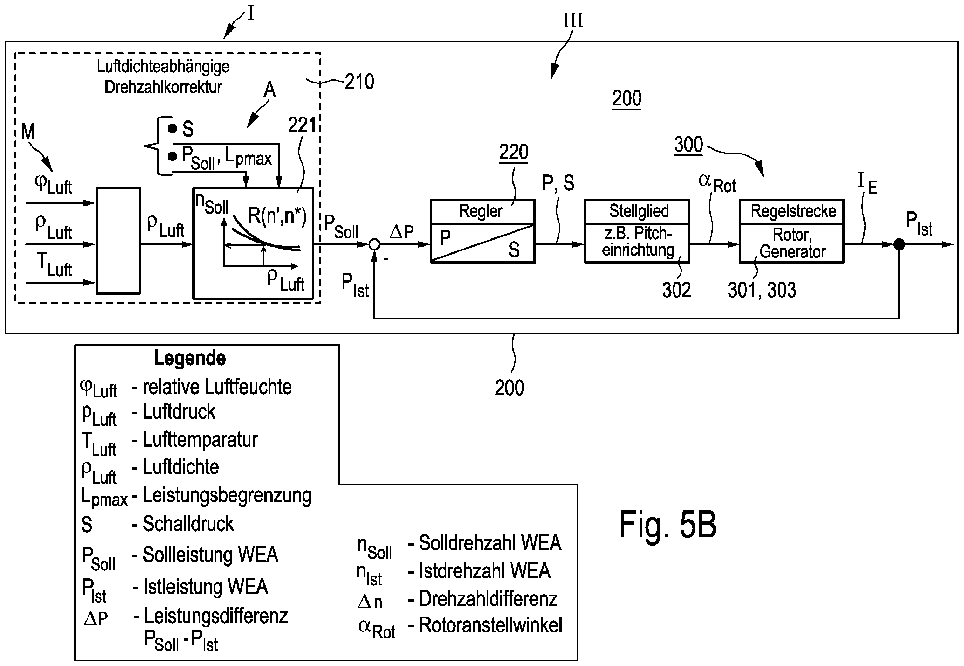

Gleichzeitig gilt es zudem zu beachten, dass eine Drehzahlerhöhung zu einer erhöhten Schallemission der Windenergieanlage (WEA) führt. Eine angepasste Betriebsführung wie sie in Fig.5A undFig.5B dargestellt ist berücksichtigt im Rahmen einer bevorzugten Ausführungsform folglich beide Faktoren: Leistung P und Schalldruck S.

Auf Basis theoretischer Abschätzungen ist es möglich, sowohl unter der Annahme konstanter Leistung also auch optional eines konstanten bzw. weitgehend gleichen Schalldrucks S, die Drehzahlen n der Betriebskennlinie R(n), der Nenn- und der Solldrehzahl der WEA anzupassen. Für eine konstante Leistung P kann eine Drehzahlkorrektur -also wie von der Erfindung erkannt-entsprechend n'=n_korr mit

$$n_{korr} = n_{norm} \left( \frac{\rho_{norm}}{\rho} \right)^{\frac{1}{3}}$$

durchgeführt werden. Die Drehzahl n_norm bezieht sich dabei auf die Drehzahl entsprechend der Betriebskennlinie (BKL).

Geht man davon aus, dass sich der resultierende Schalldruck S nicht ändert, so kann auch --gemäß der Erfindung -- eine Korrektur der Drehzahl entsprechend n*=n_korr mit

$$n_{korr} = n_{norm} \left( \frac{\rho_{norm}}{\rho} \right)^{\frac{2}{5}}$$

angewandt werden. Im Vergleich zur ersten Korrektur kann die Drehzahl hinsichtlich eines garantierten Schalldrucks S sogar noch leicht erhöht werden. Dies würde die Effizienz des Generators steigern.

Fig.3 zeigt dazu einen Kontur-Plot K betreffend eine auf die Nenndrehzahl n_nenn normierte Drehzahl n_quer in Bezug auf eine auf die Norm-Dichte p_norm normierte Dichte p_quer. Zu erkennen sind auf der x-Achse die normierte Dichte p_quer, auf der y-Achse die normierte Drehzahl n_quer, beides normiert auf Referenzgrößen n_nenn bzw. p_norm. Die Kontur entspricht der Abweichung zum garantierten Schalldruck S (hier beispielsweise ein maßgeblicher Wert für Schalldruckpegel SPL oder Schallleistungspegel). Im Bereich von Dichten kleiner der Referenzdichte (1.225 kg/m^3) können, wie zu erkennen ist, Drehzahlen n>n_nenn gefahren werden - nämlich entlang der 0-dB-Kontur; d.h. die angepasste Drehzahl wird korrigiert und die Anlage wird mittels der korrigierten Drehzahl an einer korrigierten Schallemissionsgrenze (entsprechend den Vorgaben zum Schalldruck S beispielsweise mittels einem vergebenen Schalldruckpegel SPL) betrieben. Anders ausgedrückt würde also die Anlage -ggfs. allein in Bezug auf den Schalldruck S oder in Kombination mit Bezug auf die Leistung P-- d.h. bzgl. der zu erwartenden Schallemission geregelt. Der Schallleistungspegel oder Schalldruckpegel SPL wird dabei näherungsweise bestimmt, z.B. durch simultanes Erfassen von Dichte $\rho$ und Drehzahl n. Durch eine solche Regelung kann eine erhöhte AEP (annual energy production) an bestimmten Standorten mit Luft geringerer Dichtet(wärmere Luft und/oder große Höhe über N.N.) erreicht werden.

Das heißt: Bei deutlich geringerer Dichte aufgrund standortspezifischer Parameter (Höhe des Standortes, Temperatur) sinkt der zu erwartende Schalldruck S. Für die Dichte ist eine Korrektur möglich und erfindungsgemäß vorgesehen mittels der einen oder mehreren hinterlegten angepassten Betriebskennlinien R(n', n*).

Ist die niedrigere Dichte eine Folge erhöhter Temperatur, wird in dieser besonders bevorzugten Ausführungsform zusätzlich noch der Einfluss der Temperatur T auf die Schallgeschwindigkeit $c_0$berücksichtigt werden. Da eine erhöhte Schallgeschwindigkeit zu einer niedrigeren Machzahl führt, kann eine weitere, geringe Reduzierung des Schalldruckpegels SPL erwartet werden. Der reduzierte zu erwartende Schalldruck S kann zu einer Anpassung der Nenndrehzahl verwendet werden. Dadurch würde sich der Schalldruck wieder erhöhen. Allerdings kann unter vereinfachenden Annahmen abgeschätzt werden, dass die Erhöhung des Schalldrucks S aufgrund erhöhter Drehzahl geringer ausfällt, als die Reduzierung aufgrund geringerer Dichte.

Im Einzelnen:
An Standorten großer Höhe -- z.B. Tchamma, Chile -- reduziert sich die Dichte bei gleicher Schallgeschwindigkeit. An anderen Standorten kann eine reduzierte Dichte infolge erhöhter Umgebungstemperaturen vorliegen. In letzterem Fall ändert sich auch die Schallgeschwindigkeit $c_0$ als Funktion der Temperatur

$$c_0 = \sqrt{\kappa R T} \ (1)$$

Wobei der Isentropenexponent $\varkappa$ und die spezifische Gaskonstante von Luft, R, als konstant betrachtet werden. Die Dichte ändert sich ebenfalls mit der Temperatur.

Bei der turbulenten Umströmung von Körpern kann die Schallentstehung auf Basis von Ligthhills akustischer Analogie gemäß der Veröffentlichung "M. J. Lighthill, "On sound generated aerodynamically. I. General theory.," Proc. R. Soc. London, Bd. 211, Nr. 1107, pp. 564-587, 1951" beschrieben werden. Unter der vereinfachenden Annahme einer inkompressiblen Strömung folgt ein linearer Zusammenhang zwischen Schalldruck und Dichte.

Nach Maßgabe der Veröffentlichung "Ffowcs-Williams Hall in J. E. Ffowcs Williams und L. H. Hall, "Aerodynamic sound generation by turbulent flow in the vicinity of a scattering half plane.," J Fluid Mech, Bd. 40, pp. 657-670,1970" hängt der Hinterkantenlärm mit der Dichte und der Schallgeschwindigkeit über

$$p' \propto \rho_0 Ma^{2.5} (2)$$

zusammen. Nach Maßgabe der Veröffentlichung "Amiet et al. in "J sound Vib. Bd41 Nr. 4 pp. 407-420 (1975)" ist eine ähnliche Proportionalitat zu erwarten.

Folglich wird vorgeschlagen, dass sich der Schalldruck (SPL - sound pressure level) bei Änderung der Dichte über ein einfaches Skalierungsgesetz berechnet, was sich durch Messungen des Einflusses der Dichte $\rho$ auf den turbulenten Lärm (mit Saug- und Druckseitenanteile sowie mit durch Ablösung induzierten Beiträgen) bestätigt:

$$SPL(\rho_n) = SPL(\rho_{ref}) + 20 * log_{10}\left(\frac{\rho_n}{\rho_{norm}}\right) (3)$$

Eine ähnliche Skalierung gilt auch für eine abweichende Schallgeschwindigkeit bzw. Mach-Zahl, was ebenfalls über den Einfluss einer veränderten Schallgeschwindigkeit $c_0$ auf verschiedene Lärm-Mechanismen nachgewiesen werden konnte:

$$SPL(c_n) = SPL(c_{ref}) + 20 * log_{10}\left(\left(\frac{c_{norm}}{c_n}\right)^{2.5}\right) (4)$$

Dabei bezieht sich ein Subskript n auf die angepassten Umgebungsvariablen und ref auf die Größen entsprechend Standardatmosphäre.

Einerseits gilt bezüglich der Windleistung:

$$p = \frac{\rho}{2} v_\infty^3 A c_p \eta = \frac{\rho}{2} \frac{v_{tip}^3}{\lambda^3} A c_p \eta \ (5)$$

Dabei stellt A die durchströmende Fläche, $\eta$ den Generatorwirkungsgrad und $c_p$ den Leistungsbeiwert dar. Der Leistungsbeiwert wird im Folgenden als konstant angenommen. Wird die Leistung konstant gehalten, folgt für die Blattspitzengeschwindigkeit $v_{tip}$

$$v_{tip} = \sqrt[3]{\frac{2P\lambda^3}{\rho A c_p \eta}} \sim \sqrt[3]{\frac{1}{\rho}} \ (6)$$

Die Leistung sinkt also linear mit der Luftdichte.

Andererseits gilt unter der Annahme konstanter Schallgeschwindigkeit $c_0$ für die Mach-Zahl

$$Ma \sim v_{tip} \sim \rho^{-\frac{1}{3}} \ (7)$$

unter Verwendung von Beziehung (6). Der Schalldruck S (in der Formel p') skaliert mit Dichte und Mach-Zahl wie folgt:

$$p' \sim \rho Ma^{2.5} \ (8)$$

Setzt man nun Beziehung (7) in (8) ein, folgt für den Schalldruck S (in der Formel p') bei angepasster Drehzahl

$$p' \sim \rho^{\frac{1}{6}} \ (9)$$

Bei gleicher Anlagenleistung, angepasster Drehzahl und kleinerer Dichte sollte der Schalldruck S also kleiner sein als unter Normbedingungen.

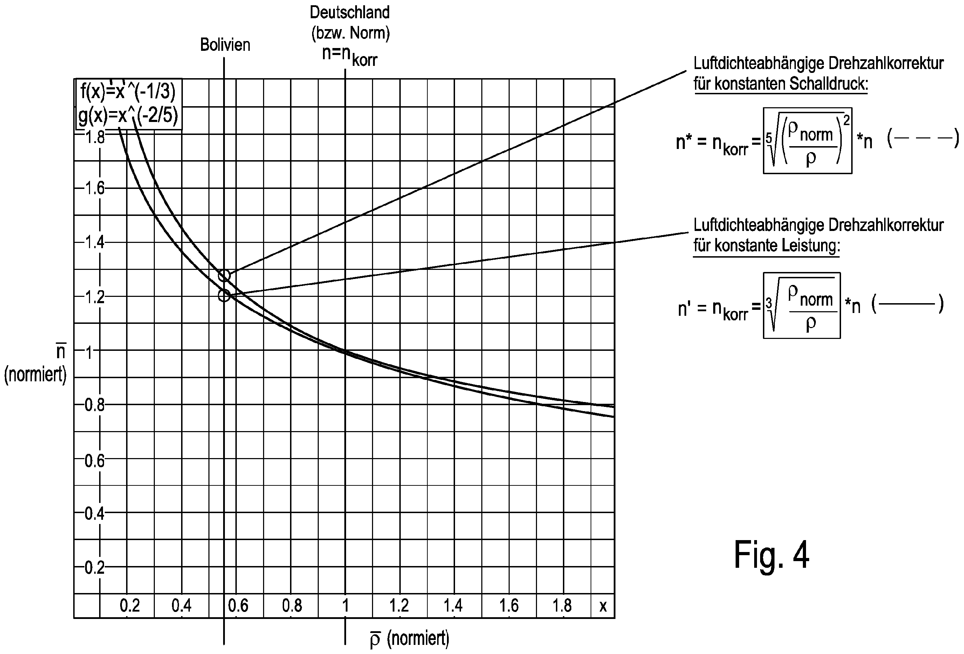

Wie in Fig.4 dargestellt gilt also einerseits: Bei gleicher Leistung liegt bei verringerter Luftdichte p eine erhöhte Anströmgeschwindigkeit vor. Die Drehzahlen in der Betriebskennline, und die Solldrehzahl, können dann nach folgender Beziehung angepasst werden, um die Schnelllaufzahl über der Drehzahl konstant zu halten:

$$n_{korr} = \sqrt[3]{\frac{\rho_{norm}}{\rho}} n \ (10)$$

(entspricht Formel I; insbesondere n_korr=n')

Hierbei ist $\rho_{norm}$ die normale Dichte, für die die Betriebskennlinie ursprünglich entworfen wurde und n_korr die korrigierte Drehzahl n', gegenüber der ursprünglich in der Betriebskennlinie definierten Drehzahl n.

Zusätzlich oder alternativ ist es auch möglich, die Drehzahl so anzupassen, dass der Schalldruck S (in der Formel p') konstant bleibt. Nach Gleichung (8) ist der Schalldruck (in der Formel p') abhängig von Dichte und Machzahl, bzw. Blattspitzengeschwindigkeit.

$$p' = const. \sim \frac{\rho}{\rho_{norm}} \left( \frac{v_{tip}}{v_{tip,norm}} \right)^{2.5} (11)$$

Daraus folgt, dass bei gleichem Schalldruck S sich die Drehzahl entsprechend der Dichte wie ebenfalls in Fig.4 dargestellt ändern kann mit

$$n_{korr} = \left( \frac{\rho_{norm}}{\rho} \right)^{\frac{2}{5}} n \ (12)$$

(entspricht Formel II, insbesondere n_korr=n*)

Nach Gleichung (12) könnte damit sogar eine noch leicht höhere Drehzahl n* im Vergleich zu Gleichung (10) verwendet werden.

In Fig.5A ist ein Verfahren zum Betrieb einer Windenergieanlage mit einem Rotor und einem über den Rotor angetriebenen Generator zur Erzeugung einer elektrischen Leistung gemäß Fig.1 oder Fig.2 beispielhaft im Rahmen einer Regelung erläutert für einen Betrieb unter Volllast. Der Volllastbetrieb betrifft einen Betrieb der Windenergieanlage im Wesentlichen ab der Nennwindgeschwindigkeit. Üblicherweise kann dann die Nennleistung erreicht werden, wenn die Windgeschwindigkeit Nennwindgeschwindigkeit erreicht hat. Für das Verfahren wird in einem ersten Schritt eine modifizierte Vorsteuerung I mittels eines Meßmoduls 210 realisiert. Im Rahmen dieser Vorsteuerung I wird eine für die Windenergieanlage relevante Umgebungsvariable M umfassend wenigstens eine für die Windenergieanlage relevante Luftdichte ermittelt. Zunächst wird vorliegend in der modifizierten Vorsteuerung als Teil des Meßmoduls 210 der Ausführungsform der Fig.5A die Dichte p_Luft durch gleichzeitiges Messen von Luftdruck p_Luft, Temperatur T Luft und gegebenenfalls der relativer Feuchte $\varphi$_ Luft bestimmt. Der erfasste Wert wird direkt zur Vorsteuerung und/oder Regelung der Anlagendrehzahl n verwendet; nämlich über die in Fig.5A dargestellte Vorsteuereinheit 221 - z.B. mit einer Recheneinheit oder dergleichen mit hinterlegter Betriebskennlinien R(n', n*). Um eine hochfrequente Schwankung der Messwerte zu unterdrücken, werden die Messwerte mit einem gleitenden Mittelwert oder ähnlichem gefiltert (nicht dargestellt). Außerdem wird die Anlagensteuerung entsprechend angepasst. Es werden als Anlagenwerte A eine Drehzahl n des Rotors ermittelt als n_IST und eine abzugebende elektrischen Leistung P_SOLL und ein Schalldruck S bzw. ggfs. ein Leistungsbegrenzung Lp_max des Generators vorgegeben.

Die Windenergieanlage, insbesondere der Generator, nämlich hier ein Erregerstrom des Generators, wird zum Erzeugen der abzugebenden Leistung gemäß einer Betriebsführung vorgegeben, welche einen Zusammenhang zwischen der Drehzahl des Rotors und der abzugebenden elektrischen Leistung angibt - hier umfasst das die Betriebskennlinie R(n', n*) oder die in Fig.3 beschriebene Kontur K als Teil einer Vorsteuerung I, die dem Meßmodul 210 zugeordnet ist. Dabei wird die Betriebsführung in Abhängigkeit der für die Windenergieanlage relevanten Luftdichte p_Luft angepasst.

Zweck eines nachfolgenden Regelkreises II im Volllastbereich zur Durchführung des Verfahrens gemäß der Ausführungsform der Fig.5A bzw. bzw. eines nachfolgenden Regelkreises III im Teillastbereich zur Durchführung des Verfahrens gemäß der Ausführungsform der Fig.5B ist dann eine automatische Anpassung der Betriebsführung, unter Berücksichtigung der korrigierten Drehzahl n → n_korr= n' bzw. n_korr= n* in Abhängigkeit der vorliegenden Luftdichte p_Luft. - Unter anderem sind vorzugsweise weiter optimale aerodynamische Anströmverhältnisse am Rotor unter Einbezug der momentanen Luftdichte p_Luft und unter Sicherstellen des prognostizierten Ertrages bei Beachtung der maximalen Schallemission erreichbar. Dadurch kann insbesondere sowohl eine summarisch garantierte Leistung P (ausgehend von der abzugebenden elektrischen Leistung - P_SOLL im Teillastbetrieb bzw. Nennleistung im Volllastbetrieb) wie auch ein oberer Schalldruck S eingehalten werden (z.B. ausgehend von dem vorgegebenen Schalldruck S bzw. ggfs. einer Leistungsbegrenzung Lp_max des Generators).

Insgesamt kann bei niedriger momentanen Luftdichte p_Luft über eine erhöhte Anlagendrehzahl n → n_korr mit n' bzw. n_korr= n* letztendlich auch eine erhöhte Jahres-Energie-Produktion (annual energy production) AEP (annual energy production) zu erwarten sein im Vergleich zu einer Betriebsweise, welche eine maßgebliche Dichteänderung zu niedrigeren Dichten bei großen Aufstellhöhen einer Windenergieanlage 100 über NN nicht berücksichtigt.

So wird hier eine angepasste Drehzahl n', n* des Rotors der Windenergieanlage zum Erzeugen einer abzugebenden elektrischen Leistung unter Verwendung der angepassten Betriebsführung umfassend die angepasste Betriebskennlinie R(n', n*) oder die in Fig.3 beschriebene Kontur K aus der Vorsteuerung I vorgegeben, d.h. unter Verwendung der für die Windenergieanlage relevanten Luftdichte vorgegeben. Insbesondere findet dies Anwendung zum Erzeugen einer optimierten abzugebenden elektrischen Leistung P mittels des Reglers 220, wobei die angepasste Drehzahl n', n* regelmäßig eine gegenüber der normalen Drehzahl n (bei normal angenommener Luftdichte) erhöhte Drehzahl n', n* bei niedrigerer Luftdichte ist.

Maßgeblicher Hintergrund ist, dass bei deutlich geringerer Luftdichte p aufgrund standortspezifischer Parameter (Höhe des Standortes, Höhe der Temperatur) auch der zu erwartende Schalldruck S und damit die im Wesentlichen relevante Schallemission der WEA sinkt.

Für die Dichte $\rho$ ist eine Korrektur der zu erwartenden Schallemission nach Vorgabe eines Schalldruckpegels SPL nach obiger Formel (3) möglich und diese zu erwartende Schallemission kann ebenfalls in die Betriebsführung beispielsweise wie in Fig.5A oder Fig.5B als angepasste Betriebskennlinie R(n, n*) eingehen.

Ist die niedrigere Dichte eine Folge erhöhter Temperatur, kann zusätzlich noch der Einfluss der Temperatur T auf die Schallgeschwindigkeit berücksichtigt werden.

Unter Berücksichtigung der insofern per Luftdichte p und/oder Schalldruck S angepassten Betriebskennlinie R(n', n*) und/oder der in Fig.3 beschriebenen Kontur K kann (zusätzlich oder alternativ) eine Schallemission der Windenergieanlage für die vorgegebene Drehzahl n oder bereits dichte-angepassten Drehzahl n' des Rotors unter Verwendung der für die Windenergieanlage relevanten Luftdichte ermittelt werden. Vorzugsweise kann also nicht nur eine vorgegebene Drehzahl n korrigiert werden zu n* sondern zusätzlich auch die bereits dichte-angepasste Drehzahl n' korrigiert werden zu n* - nämlich auf Basis der unter Verwendung der für die Windenergieanlage relevanten Luftdichte p und Schalldruck S für die ermittelte Schallemission S.

Da eine erhöhte Schallgeschwindigkeit zu einer niedrigeren Machzahl führt, kann eine weitere geringere Reduzierung des Schalldruckpegels (SPL) erwartet werden. Der somit reduzierte zu erwartende Schalldruck S kann zu einer Anpassung der Nenndrehzahl n* auch in der angepassten Betriebskennlinie R(n', n*) verwendet werden. Dadurch würde sich der Schalldruck wieder erhöhen. Allerdings kann unter vereinfachenden Annahmen abgeschätzt werden, dass die Erhöhung des Schalldrucks S aufgrund erhöhter Drehzahl n* niedriger ausfällt, als die Reduzierung aufgrund geringerer Dichte $\rho$ - damit bietet sich auch eine Vorsteuerung I gemäß einer Kontur K in Fig.3 an.

An diese im Sinne des Konzepts der Erfindung modifizierte Vorsteuerung I mittels dem Meßmodul 210 schließt sich für einen Vollastbetrieb eine Regelstrecke eines Regelkreises II der Einrichtung 200 zum Steuern und/oder Regeln (Steuer- und Regeleinrichtung 200) gemäß Fig.5A an - die Betriebsführung weist dazu einen oder mehrere oben genannte Regler 220 auf; diese können wie erläutert unter Berücksichtigung der Drehzahlabweichung $\Delta$n=n_SOLL - n_IST und in Bezug auf die in der Vorsteuerung I mittels der Messeinrichtung 210 die nach angepasster Betriebskennlinie R(n', n*) eingestellte Leistung P (Nennleistung) und/oder Schalldruck S regeln - vorzugsweise aber, wie dargestellt, vor allem die Drehzahl n→ n_Soll=n_korr konstant bzw. im Rahmen halten. Regelungsziel ist im Allgemeinen bei Volllastbetrieb eine im Wesentlichen konstante Drehzahl, jedenfalls eine Drehzahl im Rahmen einer angemessenen Bandbreite. Die Regelstrecke ist mit dem Regelkreis II grundsätzlich weiter ausgestaltet mit einer Stelleinrichtung 300 und entsprechender Aktorik bzw. Stellgliedern 301, 302, 303 - die Reihenfolge derselben ist hier nur beispielhaft. Diese Regelstrecke kann -wie oben für einen Volllastbetrieb-insbesondere auch für einen Teillastbetrieb-- beispielsweise einen Blattwinkel $\alpha$-Rot der Rotorblätter, einen Erregerstrom I_E des Generators und/oder einen Azimuthwinkel der Gondel bzw. Rotor der Windenergieanlage (nicht gezeigt) regeln, wie dies beispielsweise anhand von Fig.1 und Fig.2 und für einen Teillastsbetrieb in Fig.5B im Detail erläutert ist.

Im Ergebnis stellt sich jedenfalls für einen Vollastbetrieb eine erhöhte Drehzahl n_IST ein, welche dem Zielwert einer gemäß einer dichteangepassten Leistung P und/oder einem dichteangepassten Schalldruck S d.h. der angepassten Drehzahl n' und/oder korrigierten Drehzahl n* entspricht.

In Fig.5B ist ein Verfahren zum Betrieb einer Windenergieanlage mit einem Rotor und einem über den Rotor angetriebenen Generator zur Erzeugung einer elektrischen Leistung gemäß Fig.1 oder Fig.2 beispielhaft im Rahmen einer Regelung erläutert mit dem Regelkreis III für einen Betrieb unter Teillast.

In einem Teillastbetrieb, in dem der Wind so schwach ist, dass die Windenergieanlage 100 noch nicht mit ihrer maximalen Ausgangsleistung betrieben werden kann, wird die Ausgangsleistung in Abhängigkeit des Windes, also in Abhängigkeit der Windgeschwindigkeit, eingestellt. Der Teillastbetrieb ist also der Betrieb, bei dem die Windenergieanlage aufgrund zu schwachen Windes noch nicht ihre maximale Ausgangsleistung erreichen kann, in der sie nämlich insbesondere noch nicht ihre Nennleistung erreichen kann. Üblicherweise kann die Nennleistung dann erreicht werden, wenn die Windgeschwindigkeit Nennwindgeschwindigkeit erreicht hat. Entsprechend betrifft der Teillastbetrieb auch einen Betrieb der Windenergieanlage bis zur Nennwindgeschwindigkeit.

Im Teillastbetrieb erhält der Regler 220 des Regelkreises III wieder eine unter Berücksichtigung der Drehzahl-abweichung $\Delta$n=n_SOLL - n_IST und in Bezug auf die in der Vorsteuerung I mittels der Messeinrichtung 210 die nach angepasster Betriebskennlinie R(n', n*) eingestellte Leistung P und/oder den eingestellten Schalldruck S als Vorgabe; dabei geht gemäß einer erniedrigten Dichte $\rho$ wie oben erläutert ein angepasste bzw. korrigierte Drehzahl n', n* ein.

So kann die Windenergieanlage zum Erzeugen der abzugebenden Leistung P_Soll eingestellt werden unter Einstellen des Generators, nämlich insbesondere unter Einstellen eines Erregerstroms I_E, vorzugsweise des Generator-Läufers, vorzugsweise auch unter Berücksichtigung einer Vorgabe für den Schalldruck S. Es kann auch zusätzlich oder alternativ ein Blattwinkel eines oder mehrerer Rotorblätter mittels Stellglied 302 eingestellt werden. Dies kann z.B. mit einem entsprechenden Pitchantrieb umgesetzt werden oder mit einem Antrieb für einen Stellwinkel eines oder mehrerer Strömungselemente an einem Rotorblatt im Stellglied 302. Es kann auch eine Azimuthposition der Gondel der Windenergieanlage mittels Stellglied 303 eingestellt werden.

Im Ergebnis kann auch für einen Teillastbetrieb von einer erhöhten Drehzahl ausgegangen werden und/oder sich eine erhöhte Drehzahl n_IST einstellen für den Regelkreis III - dieses entspräche dann dem Zielwert einer dichteangepassten Leistung P und/oder einem dichteangepassten Schalldruck P d.h. bei der angepassten Drehzahl n' und/oder korrigierten Drehzahl n*. Im Teillastbetrieb ist die Windenergieanlage damit zum Erzeugen der abzugebenden Leistung gemäß dem Regelkreis III eingeregelt unter Einstellen eines Erregerstroms I_E des Generators und/oder eines Blatt-winkels $\alpha$-Rot eines Rotorblatts und/oder eines Azimuthwinkels der Gondel zum Abgleich einer Istleistung P_Ist mit einer Sollleistung P_Soll gemäß einer Leistungsdifferenz $\Delta$P, wie dies beispielhaft in Fig.5B dargestellt ist.

**EP 3 555 461 B1**

**Patentansprüche**

1. Verfahren zum Betrieb einer Windenergieanlage mit einem Rotor und mit einem über den Rotor angetriebenen Generator zur Erzeugung einer elektrischen Leistung, aufweisend die Schritte:

   - Ermitteln einer für die Windenergieanlage relevanten Umgebungsvariable umfassend wenigstens eine für die Windenergieanlage relevante Luftdichte,
   - Ermitteln einer Drehzahl des Rotors,
   - Vorgeben einer abzugebenden elektrischen Leistung des Generators,
   - Einstellen der Windenergieanlage zum Erzeugen der abzugebenden Leistung gemäß einer Betriebsführung, welche einen Zusammenhang zwischen der Drehzahl des Rotors und der abzugebenden elektrischen Leistung angibt, wobei
   - die Betriebsführung in Abhängigkeit der für die Windenergieanlage relevanten Luftdichte angepasst wird,

   **dadurch gekennzeichnet, dass**

   - (I) eine angepasste Drehzahl des Rotors der Windenergieanlage zum Erzeugen einer abzugebenden elektrischen Leistung unter Verwendung der angepassten Betriebsführung und damit unter Verwendung der für die Windenergieanlage relevanten Luftdichte vorgegeben wird, wobei zum Erzeugen einer optimierten abzugebenden elektrischen Leistung die angepasste Drehzahl eine erhöhte Drehzahl bei erniedrigter Luftdichte ist, wobei zusätzlich
   - (II) eine Schallemission der Windenergieanlage für die angepasste Drehzahl des Rotors unter Verwendung der für die Windenergieanlage relevanten Luftdichte ermittelt wird, und
   - die angepasste Drehzahl korrigiert wird auf Basis der ermittelten Schallemission unter Verwendung der für die Windenergieanlage relevanten Luftdichte.

2. Verfahren nach Anspruch 1, **dadurch gekennzeichnet, dass** die Luftdichte als relevante Umgebungsvariable eine gegenüber einer Normdichte einer Normatmosphäre erniedrigte Luftdichte ist und die Betriebsführung in Abhängigkeit der für die Windenergieanlage erniedrigten Luftdichte angepasst wird.

3. Verfahren nach Anspruch 1 oder 2, **dadurch gekennzeichnet, dass**

   - die korrigierte Drehzahl auf Basis der unter Verwendung der für die Windenergieanlage relevanten Luftdichte ermittelten Schallemission gegenüber der angepassten Drehzahl noch weiter erhöht ist, oder
   - die korrigierte Drehzahl gegenüber der angepassten Drehzahl nicht noch weiter erhöht ist und die Windenergieanlage bei noch niedrigerer oder gleichbleibender Schallemission betrieben wird.

4. Verfahren nach einem der Ansprüche 1 bis 3, **dadurch gekennzeichnet, dass** die angepasste Drehzahl begrenzt wird auf Basis der unter Verwendung der für die Windenergieanlage relevanten Luftdichte ermittelten Schallemission.

5. Verfahren nach einem der vorhergehenden Ansprüche, **dadurch gekennzeichnet, dass**

   - die Betriebsführung eine Drehzahl-Leistungs-Betriebskennlinie (n/P-Betriebskennlinie) umfasst, wobei
   - eine angepasste Betriebskennlinie vorgegeben wird in Abhängigkeit der für die Windenergieanlage relevanten Luftdichte und die Windenergieanlage zum Erzeugen der abzugebenden Leistung auf Basis der angepassten Drehzahl-Leistungs-Betriebskennlinie in der Betriebsführung eingestellt wird, wobei
   - eine so vorgegebene und angepasste aktuelle Drehzahl in der Betriebsführung vorgegeben wird und danach mittels einer Steuerung und/oder Regelung eingestellt wird.

6. Verfahren nach einem der vorhergehenden Ansprüche, **dadurch gekennzeichnet, dass** das Einstellen der Windenergieanlage mittels Einstellen des Generators unter Einstellen eines Erregerstroms des Generators erfolgt.

7. Verfahren nach einem der vorhergehenden Ansprüche, **dadurch gekennzeichnet, dass** die Luftdichte eine aktuelle Luftdichte am Ort der Windenergieanlage ist, die laufend gemessen und dynamisch angepasst wird und/oder eine generell vorherrschende Luftdichte am Ort der Windenergieanlage ist, die einmal oder wiederholt gemessen und statisch angepasst wird.

8. Verfahren nach einem der vorhergehenden Ansprüche, **dadurch gekennzeichnet, dass**

- die Luftdichte aus gemessenen Umgebungswerten bestimmt wird, wobei die Umgebungswerte eine für die Windenergieanlage relevante Lufttemperatur umfassen, und/oder
- die Luftdichte aus gemessenen Umgebungswerten bestimmt wird, wobei die Umgebungswerte optional Luftdruck und eine relative oder absolute Luftfeuchtigkeit umfassen.

9. Verfahren nach einem der vorhergehenden Ansprüche, **dadurch gekennzeichnet, dass**

- eine normale Schallemission der Windenergieanlage in einer Normatmosphäre für die Drehzahl des Rotors ermittelt wird, und
- die normale Schallemission abgeglichen wird gegen die Schallemission der Windenergieanlage für die angepasste Drehzahl des Rotors unter Verwendung der für die Windenergieanlage relevanten Luftdichte und/oder Lufttemperatur, und
- die angepasste Drehzahl des Rotors der Windenergieanlage korrigiert und optional begrenzt wird auf Basis der Schallemission.

10. Verfahren nach einem der vorhergehenden Ansprüche, **dadurch gekennzeichnet, dass**

- die Windenergieanlage mittels der korrigierten Drehzahl für die korrigierte Schallemission, betrieben wird derart, dass die Windenergieanlage an einer korrigierten Schallemissionsgrenze betrieben wird.

11. Verfahren nach einem der vorhergehenden Ansprüche, **dadurch gekennzeichnet, dass**

- zunächst die Drehzahl des Rotors unter Berücksichtigung einer vorbestimmten Normdichte einer Normatmosphäre eingestellt wird, und
- anschließend die angepasste Drehzahl unter Berücksichtigung der für die Windenergieanlage relevanten Luftdichte und/oder Lufttemperatur vorgegeben wird, wobei
- die angepasste Drehzahl korrigiert wird und die Anlage mittels der korrigierten Drehzahl an der korrigierten Schallemissionsgrenze betrieben wird.

12. Verfahren nach Anspruch 10 oder 11, **dadurch gekennzeichnet, dass** die Luftdichte eine gegenüber einer Normdichte erniedrigte Luftdichte ist und die korrigierte Drehzahl einerseits eine gegenüber der Drehzahl für die Normatmosphäre erhöhte Drehzahl ist und andererseits eine gegenüber der angepassten Drehzahl weiter erhöhte und/oder begrenzte Drehzahl ist, optional in Abhängigkeit der Lufttemperatur.

13. Verfahren nach einem der Ansprüche 1 bis 12, **dadurch gekennzeichnet, dass** die Windenergieanlage zum Erzeugen der abzugebenden Leistung eingestellt wird unter Vorgabe der angepassten Drehzahl (n') und angepassten und korrigierten Drehzahl (n*) sowie,

- im Volllastbetrieb unter Regeln der Drehzahl.

14. Verfahren nach einem der Ansprüche 1 bis 12, **dadurch gekennzeichnet, dass** die Windenergieanlage zum Erzeugen der abzugebenden Leistung eingestellt wird unter Vorgabe der angepassten Drehzahl (n') und angepassten und korrigierten Drehzahl (n*) sowie,

- im Teillastbetrieb unter Einstellen des Generators unter Einstellen eines Erregerstroms, eines oder mehrerer Rotorblätter und/oder eines oder mehrerer Strömungselemente an einem Rotorblatt, des Rotors,
- und/oder unter Einstellen eines Azimuthwinkels für die Gondel der Windenergieanlage, wobei
- unter Vorgabe der abzugebenden elektrischen Leistung, der Luftdichte und der Schallemission im Teillastbetrieb die Drehzahl beeinflusst und/oder eingestellt wird mittels einer Ansteuerung eines Anstellwinkels einer Komponente am Rotor, eines Pitch-Winkels eines Rotorblattes und/oder eines Anstellwinkels und/oder eines oder mehrerer Strömungselemente an einem Rotorblatt.

15. Einrichtung zum Steuern und/oder Regeln einer Windenergieanlage mit einer Betriebsführung ausgebildet zur Ausführung des Verfahrens nach einem der vorhergehenden Ansprüche, wobei die Betriebsführung eine Drehzahl-Leistungs-Betriebskennlinie (n/P-Betriebskennlinie) umfasst, wobei die angepasste Betriebskennlinie in der Betriebsführung eingerichtet ist und vorgegeben ist in Abhängigkeit der für die Windenergieanlage relevanten Luftdichte und die Windenergieanlage zum Erzeugen der abzugebenden Leistung mittels der angepassten Drehzahl-Leistungs-Betriebskennlinie in der Betriebsführung einstellbar ist.

16. Windenergieanlage (100) mit einem Rotor und einem über den Rotor angetriebenen Generator zur Erzeugung einer elektrischen Leistung und mit einer Einrichtung zum Steuern und/oder Regeln nach Anspruch 15.

17. Windpark (112) mit einer Mehrzahl von Windenergieanlagen (100), die zum Einspeisen der von der Mehrzahl von Windenergieanlagen erzeugten Leistung über einen gemeinsamen Einspeisepunkt (118) an ein Versorgungsnetz (120) angeschlossen sind, und wobei wenigstens eine der Windenergieanlagen eine Windenergieanlage nach Anspruch 16 ist.

**Claims**

1. Method for operating a wind power installation having a rotor and having a generator driven via the rotor for generating an electrical power, having the steps of:

   - determining an environmental variable relevant to the wind power installation and comprising at least an air density relevant to the wind power installation,
   - determining a rotational speed of the rotor,
   - specifying an electrical power to be output by the generator,
   - adjusting the wind power installation for generating the power to be output according to operational management which indicates a relationship between the rotational speed of the rotor and the electrical power to be output, wherein
   - the operational management is adapted on the basis of the air density relevant to the wind power installation, **characterized in that**
   - (I) an adapted rotational speed of the rotor of the wind power installation for generating an electrical power to be output is specified using the adapted operational management and therefore using the air density relevant to the wind power installation, wherein, for generating an optimized electrical power to be output, the adapted rotational speed is an increased rotational speed for a reduced air density, wherein additionally
   - (II) a sound emission of the wind power installation is determined for the adapted rotational speed of the rotor using the air density relevant to the wind power installation, and
   - the adapted rotational speed is corrected on the basis of the determined sound emission using the air density relevant to the wind power installation.

2. Method according to Claim 1, **characterized in that** the air density, as a relevant environmental variable, is an air density which is reduced in comparison with a standard density of a standard atmosphere, and the operational management is adapted on the basis of the reduced air density for the wind power installation.

3. Method according to Claim 1 or 2, **characterized in that**

   - the corrected rotational speed is increased yet further in comparison with the adapted rotational speed on the basis of the sound emission determined using the air density relevant to the wind power installation, or
   - the corrected rotational speed is not increased yet further in comparison with the adapted rotational speed, and the wind power installation is operated with a sound emission which is still lower or remains the same.

4. Method according to one of Claims 1 to 3, **characterized in that** the adapted rotational speed is limited on the basis of the sound emission determined using the air density relevant to the wind power installation.

5. Method according to one of the preceding claims, **characterized in that**

   - the operational management comprises a rotational speed/power operating characteristic curve (n/P operating characteristic curve), wherein
   - an adapted operating characteristic curve is specified on the basis of the air density relevant to the wind power installation, and the wind power installation for generating the power to be output is adjusted on the basis of the adapted rotational speed/power operating characteristic curve in the operational management, wherein
   - a current rotational speed specified and adapted in this way is specified in the operational management and is then adjusted by means of open-loop control and/or closed-loop control.

6. Method according to one of the preceding claims, **characterized in that** the wind power installation is adjusted by adjusting the generator, by adjusting an excitation current of the generator.

7.  Method according to one of the preceding claims, **characterized in that** the air density is a current air density at the location of the wind power installation which is continuously measured and dynamically adapted and/or is a generally prevailing air density at the location of the wind power installation which is measured once or repeatedly and is statically adapted.

8.  Method according to one of the preceding claims, **characterized in that**

    - the air density is determined from measured environmental values, wherein the environmental values comprise an air temperature relevant to the wind power installation, and/or
    - the air density is determined from measured environmental values, wherein the environmental values optionally comprise air pressure and relative or absolute humidity.

9.  Method according to one of the preceding claims, **characterized in that**

    - a normal sound emission of the wind power installation in a standard atmosphere is determined for the rotational speed of the rotor, and
    - the normal sound emission is compared with the sound emission of the wind power installation for the adapted rotational speed of the rotor using the air density and/or air temperature relevant to the wind power installation, and
    - the adapted rotational speed of the rotor of the wind power installation is corrected and is optionally limited on the basis of the sound emission.

10. Method according to one of the preceding claims, **characterized in that**

    - the wind power installation is operated by means of the corrected rotational speed for the corrected sound emission in such a manner that the wind power installation is operated at a corrected sound emission limit.

11. Method according to one of the preceding claims, **characterized in that**

    - the rotational speed of the rotor is initially adjusted taking into account a predetermined standard density of a standard atmosphere, and
    - the adapted rotational speed is then specified taking into account the air density and/or air temperature relevant to the wind power installation, wherein
    - the adapted rotational speed is corrected and the installation is operated by means of the corrected rotational speed at the corrected sound emission limit.

12. Method according to Claim 10 or 11, **characterized in that** the air density is an air density which is reduced in comparison with a standard density and the corrected rotational speed is, on the one hand, a rotational speed which is increased in comparison with the rotational speed for the standard atmosphere and, on the other hand, is a rotational speed which is increased and/or limited further in comparison with the adapted rotational speed, optionally on the basis of the air temperature.

13. Method according to one of Claims 1 to 12, **characterized in that** the wind power installation for generating the power to be output is adjusted by specifying the adapted rotational speed (n') and adapted and corrected rotational speed (n*) and,

    - in full-load operation, by the closed-loop control of the rotational speed.

14. Method according to one of Claims 1 to 12, **characterized in that** the wind power installation for generating the power to be output is adjusted by specifying the adapted rotational speed (n') and adapted and corrected rotational speed (n*) and,

    - during partial-load operation, by adjusting the generator, by adjusting an excitation current, one or more rotor blades and/or one or more flow elements on a rotor blade of the rotor,
    - and/or by setting an azimuth angle for the nacelle of the wind power installation, wherein,
    - by specifying the electrical power to be output, the air density and the sound emission during partial-load operation, the rotational speed is influenced and/or adjusted by controlling a setting angle of a component on the rotor, a pitch angle of a rotor blade, and/or a setting angle and/or one or more flow elements on a rotor blade.

**15.** Device for the open-loop and/or closed-loop control of a wind power installation, having operational management designed to carry out the method according to one of the preceding claims, wherein the operational management comprises a rotational speed/power operating characteristic curve (n/P operating characteristic curve), wherein the adapted operating characteristic curve is set up and specified in the operational management on the basis of the air density relevant to the wind power installation, and the wind power installation for generating the power to be output is adjustable by means of the adapted rotational speed/power operating characteristic curve in the operational management.

**16.** Wind power installation (100) having a rotor and a generator driven via the rotor for generating an electrical power and having a device for open-loop and/or closed-loop control according to Claim 15.

**17.** Wind farm (112) having a plurality of wind power installations (100) which, for the purpose of feeding in the power generated by the plurality of wind power installations, are connected to a supply network (120) via a common feed-in point (118), and wherein at least one of the wind power installations is a wind power installation according to Claim 16.

## Revendications

**1.** Procédé d'exploitation d'une installation éolienne comprenant un rotor et comprenant un générateur entraîné par l'intermédiaire du rotor pour générer une puissance électrique, comprenant les étapes suivantes :

- la détermination d'une variable environnementale pertinente pour l'installation éolienne, comprenant au moins une densité de l'air pertinente pour l'installation éolienne,
- la détermination d'une vitesse de rotation du rotor,
- la prédéfinition d'une puissance électrique du générateur à fournir,
- le réglage de l'installation éolienne pour générer la puissance à fournir conformément à un guide d'exploitation qui indique une relation entre la vitesse de rotation du rotor et la puissance électrique à fournir,
- le guide d'exploitation étant adapté en fonction de la densité de l'air pertinente pour l'installation éolienne,

**caractérisé en ce que**

- (I) une vitesse de rotation adaptée du rotor de l'installation éolienne pour générer une puissance électrique à fournir est prédéfinie en utilisant le guide d'exploitation adapté et donc en utilisant la densité de l'air pertinente pour l'installation éolienne, la vitesse de rotation adaptée étant une vitesse de rotation augmentée à une densité de l'air réduite pour générer une puissance électrique à fournir optimisée, en outre
- (II) une émission sonore de l'installation éolienne est déterminée pour la vitesse de rotation adaptée du rotor en utilisant la densité de l'air pertinente pour l'installation éolienne, et
- la vitesse de rotation adaptée est corrigée sur la base de l'émission sonore déterminée en utilisant la densité de l'air pertinente pour l'installation éolienne.

**2.** Procédé selon la revendication 1, **caractérisé en ce que** la densité de l'air en tant que variable environnementale pertinente est une densité de l'air réduite par rapport à une densité standard d'une atmosphère standard et le guide d'exploitation est adapté en fonction de la densité de l'air réduite pour l'installation éolienne.

**3.** Procédé selon la revendication 1 ou 2, **caractérisé en ce que**

- la vitesse de rotation corrigée sur la base de l'émission sonore déterminée en utilisant la densité de l'air pertinente pour l'installation éolienne est encore davantage augmentée par rapport à la vitesse de rotation adaptée, ou
- la vitesse de rotation corrigée n'est pas encore davantage augmentée par rapport à la vitesse de rotation adaptée et l'installation éolienne est exploitée avec une émission sonore encore plus faible ou inchangée.

**4.** Procédé selon l'une quelconque des revendications 1 à 3, **caractérisé en ce que** la vitesse de rotation adaptée est limitée sur la base de l'émission sonore déterminée en utilisant la densité de l'air pertinente pour l'installation éolienne.

**5.** Procédé selon l'une quelconque des revendications précédentes, **caractérisé en ce que**

- le guide d'exploitation comprend une courbe caractéristique d'exploitation vitesse de rotation-puissance (courbe caractéristique d'exploitation n/P),
- une courbe caractéristique d'exploitation adaptée étant prédéfinie en fonction de la densité de l'air pertinente pour l'installation éolienne et l'installation éolienne étant réglée pour générer la puissance à fournir sur la base de la courbe caractéristique d'exploitation vitesse de rotation-puissance adaptée dans le guide d'exploitation,
- une vitesse de rotation actuelle ainsi prédéfinie et adaptée étant prédéfinie dans le guide d'exploitation et étant ensuite réglée au moyen d'une commande et/ou d'une régulation.

6. Procédé selon l'une quelconque des revendications précédentes, **caractérisé en ce que** le réglage de l'installation éolienne est effectué au moyen d'un réglage du générateur en réglant un courant d'excitation du générateur.

7. Procédé selon l'une quelconque des revendications précédentes, **caractérisé en ce que** la densité de l'air est une densité de l'air actuelle à l'emplacement de l'installation éolienne, qui est mesurée en permanence et adaptée dynamiquement et/ou une densité de l'air qui règne généralement à l'emplacement de l'installation éolienne, qui est mesurée une fois ou de manière répétée et adaptée statiquement.

8. Procédé selon l'une quelconque des revendications précédentes, **caractérisé en ce que**

- la densité de l'air est déterminée à partir de valeurs ambiantes mesurées, les valeurs ambiantes comprenant une température de l'air pertinente pour l'installation éolienne, et/ou
- la densité de l'air est déterminée à partir de valeurs ambiantes mesurées, les valeurs ambiantes comprenant éventuellement la pression de l'air et l'humidité de l'air relative ou absolue.

9. Procédé selon l'une quelconque des revendications précédentes, **caractérisé en ce que**

- une émission sonore normale de l'installation éolienne dans une atmosphère standard est déterminée pour la vitesse de rotation du rotor, et
- l'émission sonore normale est comparée à l'émission sonore de l'installation éolienne pour la vitesse de rotation adaptée du rotor en utilisant la densité de l'air et/ou la température de l'air pertinentes pour l'installation éolienne, et
- la vitesse de rotation adaptée du rotor de l'installation éolienne est corrigée et éventuellement limitée sur la base de l'émission sonore.

10. Procédé selon l'une quelconque des revendications précédentes, **caractérisé en ce que**

- l'installation éolienne est exploitée au moyen de la vitesse de rotation corrigée pour l'émission sonore corrigée, de telle sorte que l'installation éolienne est exploitée à une limite d'émission sonore corrigée.

11. Procédé selon l'une quelconque des revendications précédentes, **caractérisé en ce que**

- tout d'abord, la vitesse de rotation du rotor est réglée en tenant compte d'une densité standard prédéterminée d'une atmosphère standard, et
- ensuite, la vitesse de rotation adaptée est prédéfinie en tenant compte de la densité de l'air et/ou de la température de l'air pertinentes pour l'installation éolienne,
- la vitesse de rotation adaptée est corrigée et l'installation est exploitée au moyen de la vitesse de rotation corrigée à la limite d'émission sonore corrigée.

12. Procédé selon la revendication 10 ou 11, **caractérisé en ce que** la densité de l'air est une densité de l'air réduite par rapport à une densité standard et la vitesse de rotation corrigée est d'une part une vitesse de rotation augmentée par rapport à la vitesse de rotation pour l'atmosphère standard et d'autre part une vitesse davantage augmentée et/ou limitée par rapport à la vitesse de rotation adaptée, éventuellement en fonction de la température de l'air.

13. Procédé selon l'une quelconque des revendications 1 à 12, **caractérisé en ce que** l'installation éolienne est réglée pour générer la puissance à fournir en prédéfinissant la vitesse de rotation adaptée (n') et la vitesse de rotation adaptée et corrigée (n*) ainsi que,

- en mode d'exploitation à pleine charge, en régulant la vitesse de rotation.

**14.** Procédé selon l'une quelconque des revendications 1 à 12, **caractérisé en ce que** l'installation éolienne est réglée pour générer la puissance à fournir en prédéfinissant la vitesse de rotation adaptée (n') et la vitesse de rotation adaptée et corrigée (n*) ainsi que,

- en mode d'exploitation à charge partielle, en réglant le générateur en réglant un courant d'excitation, une ou plusieurs pales de rotor et/ou un ou plusieurs éléments d'écoulement sur une pale de rotor, du rotor,
- et/ou en réglant un angle d'azimut pour la nacelle de l'installation éolienne,
- en prédéfinissant la puissance électrique à fournir, la densité de l'air et l'émission sonore en mode d'exploitation à charge partielle, la vitesse de rotation étant influencée et/ou réglée au moyen d'une commande d'un angle d'inclinaison d'un composant sur le rotor, d'un angle de pas d'une pale de rotor et/ou d'un angle d'inclinaison et/ou d'un ou plusieurs éléments d'écoulement sur une pale de rotor.

**15.** Appareil de commande et/ou de régulation d'une installation éolienne comprenant un guide d'exploitation configuré pour l'exécution du procédé selon l'une quelconque des revendications précédentes, le guide d'exploitation comprenant une courbe caractéristique d'exploitation vitesse de rotation-puissance (courbe caractéristique d'exploitation n/P), la courbe caractéristique d'exploitation adaptée étant établie et prédéfinie dans le guide d'exploitation en fonction de la densité de l'air pertinente pour l'installation éolienne et l'installation éolienne pour générer la puissance à fournir est ajustable dans la gestion de l'exploitation au moyen de la courbe caractéristique d'exploitation vitesse de rotation-puissance adaptée.

**16.** Installation éolienne (100) comprenant un rotor et un générateur entraîné par l'intermédiaire du rotor pour générer une puissance électrique et comprenant un appareil de commande et/ou de régulation selon la revendication 15.

**17.** Parc éolien (112) comprenant une pluralité d'installations éoliennes (100) qui sont raccordées à un réseau d'alimentation (120) par l'intermédiaire d'un point d'injection commun (118) pour injecter la puissance générée par la pluralité d'installations éoliennes, et dans lequel au moins une des installations éoliennes est une installation éolienne selon la revendication 16.

Fig. 1

Fig. 2

EP 3 555 461 B1

Fig. 3

EP 3 555 461 B1

Fig. 4

Fig. 5A

Legende

$\varphi_{Luft}$ - relative Luftfeuchte
$p_{Luft}$ - Luftdruck
$T_{Luft}$ - Lufttemparatur
$\rho_{Luft}$ - Luftdichte
$L_{pmax}$ - Leistungsbegrenzung
S - Schalldruck
$P_{Soll}$ - Sollleistung WEA
$n_{Soll}$ - Solldrehzahl WEA
$n_{Ist}$ - Istdrehzahl WEA
$\Delta n$ - Drehzahldifferenz
$\alpha_{Rot}$ - Rotoranstellwinkel

I — III

Luftdichteabhängige Drehzahlkorrektur — 210

200

300

M

$\varphi_{Luft}$

$\rho_{Luft}$

$T_{Luft}$

$\rho_{Luft}$

$n_{Soll}$ — $R(n',n^*)$ — $\rho_{Luft}$

A — $P_{Soll}, L_{pmax}$ — S

221

$P_{Soll}$

$\Delta P$ — $P_{Ist}$ — -

220 — Regler — P / S — P, S

Stellglied z.B. Pitch-einrichtung — 302

$\alpha_{Rot}$

Regelstrecke Rotor, Generator — 301, 303

$I_E$

$P_{Ist}$

200

**Legende**

| | |
|---|---|
| $\varphi_{Luft}$ | - relative Luftfeuchte |
| $p_{Luft}$ | - Luftdruck |
| $T_{Luft}$ | - Lufttemparatur |
| $\rho_{Luft}$ | - Luftdichte |
| $L_{pmax}$ | - Leistungsbegrenzung |
| S | - Schalldruck |
| $P_{Soll}$ | - Sollleistung WEA |
| $P_{Ist}$ | - Istleistung WEA |
| $\Delta P$ | - Leistungsdifferenz $P_{Soll} - P_{Ist}$ |

| | |
|---|---|
| $n_{Soll}$ | - Solldrehzahl WEA |
| $n_{Ist}$ | - Istdrehzahl WEA |
| $\Delta n$ | - Drehzahldifferenz |
| $\alpha_{Rot}$ | - Rotoranstellwinkel |

Fig. 5B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1368566 B1
- DE 19844258 A1
- JP 2008309488 A
- EP 2264313 B1
- WO 2012149984 PCT
- WO 2014078773 PCT
- EP 2463520 A2
- EP 1918581 A2
- EP 1368566 A

**In der Beschreibung aufgeführte Nicht-Patentliteratur**

- Assessment of Research Needs for Wind Turbine Rotor Materials Technology - Chapter 6. Gemäß dem Artikel National. Academy Press, 1991
- *Active Control in Wind Turbines - Control Problem for Wind Turbines,* 91-108, http://www.nap.edu/read/1824/chapter/8#96
- **M. J. LIGHTHILL.** On sound generated aerodynamically. I. General theory. *Proc. R. Soc. London,* 1951, vol. 211 (1107), 564-587
- **J. E. FFOWCS WILLIAMS ; L. H. HALL.** Aerodynamic sound generation by turbulent flow in the vicinity of a scattering half plane. *J Fluid Mech,* 1970, vol. 40, 657-670
- **AMIET et al.** *J sound Vib,* 1975, vol. 41 (4), 407-420